# EUROPÄISCHE PATENTSCHRIFT

(11) **EP 3 499 145 B1**
(45) Veröffentlichungstag und Bekanntmachung des Hinweises auf die Patenterteilung: **19.06.2024**
(21) Anmeldenummer: 18212496.6
(22) Anmeldetag: 14.12.2018
(51) Int. Cl.: F24F 13/24, E04F 13/08, E04B 9/00, F24D 3/16, F24F 5/00, F24F 13/068, F24F 13/078

(54) **ANORDNUNG EINER VORRICHTUNG ZUR TEMPERIERUNG EINES RAUMES AN EINER DECKE DES RAUMES**
ARRANGEMENT OF A DEVICE FOR HEATING OR COOLING OF A ROOM AT A CEILING OF THE ROOM
ARRANGEMENT D'UN DISPOSITIF DE MISE EN TEMPÉRATURE D'UN ESPACE SOUS UN PLAFOND

(30) Priorität: 15.12.2017 DE 102017130081
(43) Veröffentlichungstag der Anmeldung: 19.06.2019
(73) Patentinhaber: Krantz GmbH, 52072 Aachen (DE)
(72) Erfinder: Makulla, Detlef, 52134 Herzogenrath (DE); Baltes, Martin, 52074 Aachen (DE)
(74) Vertreter: Bauer, Dirk

(56) Entgegenhaltungen:
- EP-A2- 0 651 106
- WO-A1-96/21827
- DE-U1- 20 106 884
- DE-U1-202016 107 007

## Beschreibung

### Einleitung

Die Erfindung betrifft eine Anordnung einer Vorrichtung zur Temperierung eines Raums an einer Decke des Raumes, umfassend
- eine Mehrzahl von langgestreckten, mit ihren Längsachsen parallel zueinander angeordneten, vorzugsweise metallischen, Wärmeübertragungsprofilen und
- pro Wärmeübertragungselement eine Rohrleitung zur Durchströmung mit einem Wärmeträgermedium,
wobei zumindest ein Rohrleitungsabschnitt parallel zu einer Längsachse eines Wärmeübertragungsprofils verläuft und mit letzterem in wärmeübertragender Weise gekoppelt ist, wobei die Wärmeübertragungsprofile zumindest bereichsweise perforiert sind und zwischen einer einer Decke des Raumes zugewandten Oberseite der Wärmeübertragungsprofile und der Decke mindestens ein der Vorrichtung zugehöriger Schallabsorber auf einer der Decke zugewandten Seite der Vorrichtung angeordnet ist, wobei sich zwischen benachbarten Wärmeübertragungsprofilen jeweils ein Spalt zum Durchtritt von einerseits Schall aus dem Raum in den Schallabsorber und andererseits Luft aus dem Raum in einen oberhalb der Wärmeübertragungsprofile und unterhalb des Schallabsorbers befindlichen Zwischenraum befindet.

### Stand der Technik

Vorrichtungen der vorgenannten Art sind aus dem Stand der Technik bekannt und werden insbesondere zur Kühlung von Räumen eingesetzt.

Die in der GB 686 358 A sowie in der DE 962 931 B beschriebenen Vorrichtungen zur Temperierung eines Raumes weisen jeweils mehrere nebeneinander angeordnete, perforierte Wärmeübertragungsprofile auf, welche jeweilig einem Rohrleitungsabschnitt zugeordnet sind. Zwischen den jeweiligen Wärmeübertragungsprofilen und der Decke des Raumes ist ein Schallabsorber angeordnet. Nachteiliger Weise wird eine Schallabsorption durch den Schallabsorber in beiden Anmeldungen nur mittelbar über dem Raum zugewandte Perforationen ermöglicht.

Die in der DE 93 15 709 U1 beschriebenen Wärmeübertragungsprofile einer Kühldecke weisen Stegabschnitte auf, an denen jeweils eine Haltevorrichtung angeformt ist. Diese Haltevorrichtungen sind als Klemmprofil ausgebildet. Das jeweilige Wärmeübertragungsprofil mit der dazugehörigen Haltevorrichtung ist als Strangpressprofil ausgeformt. Mit Hilfe der Haltevorrichtung wird das Wärmeübertragungsprofil an die mit dem Wärmeüberträgermedium durchströmte Rohrleitung geklickt. Ein Wärmeaustausch zwischen dem Wärmeträgermedium und den Wärmeübertragungsprofilen erfolgt über die Rohrleitung und die daran befestigte Haltevorrichtung.

Des Weiteren umfasst das bekannte Wärmeübertragungsprofil Schenkelabschnitte, die abgewinkelt von Längsachsen eines Stegabschnittes des Wärmeübertragungsprofils ausgehen. Dabei ist einer der zwei Schenkelabschnitte als Luftleitschenkel so in Richtung eines in Einbauposition nächstliegenden Wärmeübertragungsprofils geneigt, dass zwischen den Wärmeübertragungsprofilen ein Luftkanal in Richtung auf das über dem nächstliegenden Wärmeübertragungsprofil liegende Kühlrohr gebildet wird. Mit der Ausbildung der die Kühlrohre verblendenden Wärmeübertragungsprofile als Luftleitprofile wird angestrebt, eine besonders effektive großflächige und zugfreie Abführung hoher Wärmelasten aus dem zu kühlenden Raum durch konvektiven Wärmetransport zu ermöglichen.

Das in der DE 196 15 419 C1 beschriebene Wärmeübertragungsprofil in Form eines Aluminium-Strangpressprofils umschließt hingegen das Rohr vollständig. Aufgrund der großen Fläche des Wärmeübertragungsprofils, die in den Raum ausgerichtet ist, lässt sich eine gute Wärmeübertragung mittels Strahlungswärmeaustausch erzielen. Eine Verbindung zwischen dem Aluminium-Strangpressprofil und dem mit dem Wärmeüberträgermedium durchströmten Rohrleitungsabschnitt findet durch eine geringfügige Aufweitung der Rohrleitung statt, nachdem das Aluminium-Strangpressprofil darauf geschoben wurde.

Ein weiteres Wärmeübertragungsprofil wird in der DE 296 09 858 U1 dargestellt. Das Wärmeübertragungsprofil setzt sich aus zwei Blechprofilhälften zusammen, die in einem zusammengesetzten Zustand eine Rohrleitung umschließen. Die beiden Blechprofilhälften werden ineinander geschoben und bevorzugt nach Art einer Verstemmung formschlüssig oder mittels einer Verklebung stoffschlüssig miteinander verbunden, wobei der Rohrleitungsabschnitt zwischen den Blechprofilhälften angeordnet ist.

Typischerweise ist in Räumen mit einer hohen Geräuschkulisse, wie dieses beispielweise bei Flughafenterminals oder Großraumbüros der Fall ist, nicht nur eine Temperierung des Raumes notwendig, sondern es sollte zusätzlich eine Schalldämmung erfolgen, um die Raumakustik zu verbessern. Da sowohl Temperierungsvorrichtungen als auch Schalldämmungsvorrichtungen normalerweise an der Decke angebracht werden, sehen die DE 20 2009 000 717 U1 und die EP 2 468 973 B1 vor, dass Wärmetauscherelemente und Schalldämmungselemente nebeneinander angeordnet sind. Es hat sich jedoch herausgestellt, dass dies dazu führen kann, dass entweder keine ausreichende Schalldämmung erreicht wird oder der Raum nicht ausreichend gekühlt oder geheizt wird.

In der DE 10 2014 110 070 B4 wird eine Deckenstrahlvorrichtung zur Aufheizung eines Raumes dargestellt, welche eine Deckenstrahlplatte und mehrere mit einem Wärmeträgermedium durchströmte Rohrleitungen umfasst. Die Rohrleitungen sind an einer der Decke zugewandten Seite der Deckenstrahlplatte angeordnet. An Seitenwänden der Deckenstrahlvorrichtung befinden sich ein Schall- und ein Wärmedämmmaterial. Zusätzlich befindet sich unmittelbar oberhalb der Rohrleitungen ein weiteres Wärmedämmmaterial. Die Dämmung ist notwendig, damit nicht zu viel Wärme an die Umgebung oberhalb der Deckenstrahlvorrichtung oder an die Decke selbst abgegeben wird. Somit kann der Wirkungsgrad verbessert werden, indem der Anteil der an den Raum abgegebenen Wärme vergrößert wird.

Die DE 10 2011 121 164 B4 beschreibt eine Deckenstrahlvorrichtung mit einer Deckenstrahlplatte und mehrere auf der Deckenstrahlplatte angeordnete Rohrleitungen.

Zwischen den Rohrleitungen und der Deckenstrahlplatte befindet sich eine Absorptionsschicht. Zusätzlich weist die Deckenstrahlvorrichtung noch eine Absorptionsbox als Schallabsorptionselement auf, wobei die Absorptionsbox mittig auf der Deckenstrahlplatte angebracht ist. Innerhalb der Absorptionsbox befindet sich ein Absorptionsmaterial. Die Absorptionsbox weist Öffnungen an ihren Längsseiten auf, damit Schall durch in der Deckenstrahlplatte befindliche Perforationen in die Absorptionsbox eindringen und absorbiert werden kann. Zusätzlich befindet sich auf einer dem Raum zugewandten Unterseite der Absorptionsbox eine weitere Öffnung, durch die der Schall unmittelbar in die Absorptionsbox eingeleitet wird, um die Schallabsorption zu erhöhen. Aus der EP 0 651 106 A2 ist eine Kühldecke bekannt, die zumindest ein Deckenelement sowie ein Rohrsystem, welches seinerseits eine Mehrzahl von Kühlrohren aufweist, umfasst. Dabei liegen die Kühlrohre des Rohrsystems auf dem Deckenelement auf und werden endseitig mittels Fixierelementen an einem Halteglied befestigt. Die EP 0 651 106 A2 offenbart damit eine Anordnung mit den Merkmalen des Oberbegriffs von Anspruch 1.

### Aufgabe

Der vorliegenden Erfindung liegt nunmehr die Aufgabe zugrunde, die Vorrichtung der eingangsbeschriebenen Art derart weiterzuentwickeln, dass diese in jeweils möglichst effizienter Weise sowohl zur Temperierung als auch zur Schalldämmung eingesetzt werden kann.

### Lösung

Ausgehend von einer Anordnung einer Vorrichtung der eingangs beschriebenen Art wird die zugrunde liegende Aufgabe gemäß der Erfindung durch eine Anordnung mit den Merkmalen von Anspruch 1 gelöst. Bevorzugte Ausführungsformen der Erfindung sind in den abhängigen Ansprüchen definiert. Gemäß der Erfindung ist vorgesehen, dass die Wärmeübertragungsprofile - im Querschnitt betrachtet-jeweils in einem Mittelbereich einen U-förmigen Abschnitt mit zwei dem zu temperierenden Raum zugewandten Schenkeln und einer mit einem Rohrleitungsabschnitt in Kontakt stehende Basis aufweisen, und dass ein Kontaktprofil mit beiden Schenkeln in wärmeleitendem Kontakt steht, wobei der Rohrleitungsabschnitt zwischen dem Wärmeübertragungsprofil und dem Kontaktprofil auf einer der Decke zugewandten Seite des Wärmeübertragungsprofils angeordnet ist.

Im Sinne der vorliegenden Anmeldung ist vorgesehen, dass die Vorrichtung mehrere langgestreckte Wärmeübertragungsprofile aufweist, die vorzugsweise zwischen 8 cm und 20 cm breit und vorzugsweise zwischen 100 cm und 250 cm lang sind. Längsachsen der Wärmeübertragungsprofile sind parallel und in einem Abstand zueinander ausgerichtet, wobei die Längsachsen weiterhin parallel zur Decke angeordnet sind. Der Abstand zwischen den Längsachsen der Wärmeübertragungsprofile kann zwischen 8 cm und 40 cm, weiter vorzugsweise zwischen 10 cm und 15 cm betragen. Der lichte, in horizontale Richtung gemessene Abstand zwischen den Wärmeübertragungsprofilen kann wiederum zwischen 0 cm und 20 cm, weiter vorzugsweise zwischen 3 cm und 10 cm betragen.

Weiterhin ist im Sinne der vorliegenden Anmeldung vorgesehen, dass vorzugsweise jedem Wärmeübertragungsprofil genau eine Rohrleitung zugeordnet ist. Grundsätzlich ist es aber auch möglich, eine Mehrzahl entsprechend kleiner Rohre parallel nebeneinander entlang der Längsrichtung des Wärmeübertragungsprofils zu führen, insbesondere sogenannte Kunststoff-Kapillarrohre. Die mindestens eine Rohrleitung weist zumindest einen Rohrleitungsabschnitt auf, der parallel zur Längsachse des Wärmeübertragungsprofils angeordnet ist. Ferner können die auf mehreren Wärmeübertragungsprofilen angeordneten Rohrleitungen in einem gemeinsamen Kreislauf zusammengefasst sein, wobei der Kreislauf vorzugsweise entweder mäanderförmig (Reihenschaltung) oder harfenförmig (Parallelschaltung) oder als Kombination der beiden Verschaltungsarten ausgestaltet ist. Das durch die Rohleitung hindurchgeleitete Wärmeträgermedium kann beispielsweise Wasser sein.

Der Vorteil der erfindungsgemäßen Vorrichtung ist darin zu sehen, dass sowohl eine ausreichend gute Temperierung eines Raumes als auch eine hinreichende Schallabsorption möglich. Dies ist insbesondere der langgestreckten Form der Wärmeübertragungsprofile sowie den darin vorhandenen Perforationen zu verdanken. Die Anzahl der Wärmeübertragungsprofile der Vorrichtung und/oder deren Länge sowie Breite können flexibel für jeden Einzelfall festgelegt werden, so dass ein gutes Raumklima in dem Raum geschaffen werden kann. Zusätzlich kann aufgrund der in dem Wärmeübertragungsprofil vorhandenen Perforationen ausreichend Schall aus dem Raum zu den Schallabsorbern gelangen und dort absorbiert werden.

Über den Spalt zwischen den Wärmeübertragungsprofilen kann der Schall zusätzlich von dem Raum zu den Schallabsorbern geleitet werden. Der Spalt wirkt darüber hinaus als Nachströmfläche für die zu temperierende, insbesondere aufsteigende und zu kühlende warme Luft und begünstigt eine Kreislaufströmung der Luft vom Raum zur Oberseite des Wärmeübertragungsprofiles und zurück, wobei die Rückströmung durch die Perforationen in den Wärmeübertragungsprofilen erfolgt. Somit besteht die Möglichkeit, dass auch die Oberseite des Wärmeübertragungsprofils zur Kühlung beiträgt.

Unter Spalt im Sinne der vorliegenden Anmeldung ist auch ein Freiraum zu verstehen, der sich nicht durchgängig in Längsrichtung zwischen zwei benachbarten Wärmeübertragungsprofilen erstreckt, sondern durch Kontaktabschnitte zwischen zwei benachbarten Wärmeübertragungsprofilen unterbrochen ist. Vorzugsweise ist die Summe der Kontaktabschnitte deutlich geringer als die Summe der Längen der Spaltabschnitte. Auch mittels kurz ausgeführter Kontaktabschnitte kann eine gegenseitige Stabilisierung benachbarter Wärmeübertragungsprofile erreicht werden, wodurch die Steifigkeit der Gesamtkonstruktion gesteigert werden kann. Es ist zu beachten, dass der insgesamt, für eine Nachströmung zur Verfügung stehende freie Querschnitt im Bereich der Trennung zwischen benachbarten Wärmeübertragungsprofilen hinreichend groß ist, um eine große Wärmeübertagungsleistung der erfindungsgemäßen Vorrichtung zu gewährleisten.

Der Vorteil des erfindungsgemäßen Aufbaus der Wärmeübertragungsprofile im Hinblick auf ihren Querschnitt ist darin zu sehen, dass in einem Mittelbereich des Wärmeübertragungsprofils eine größere wärmeübertragende Kontaktfläche zwischen dem Kontaktprofil und dem Wärmeübertragungsprofil gebildet wird, denn das Kontaktprofil steht nicht nur mit der Basis des Wärmeübertragungsprofils in Verbindung, sondern auch die Schenkel des U-förmigen Abschnitts des Wärmeübertragungsprofils stehen mit dem Kontaktprofil wärmeleitend in Verbindung. Die Vergrößerung der Wärmeübertragung in Form von Wärmeleitung von der Rohrleitung über das Kontaktprofil zu dem Wärmeübertragungsprofil in vertikale Richtung, bringt zudem den Vorteil mit sich, dass die horizontale Fläche, die zur Übertragung der Wärme von dem Wärmeübertragungsprofil an die Raumluft, nicht verkleinert werden muss.

Der Mittelbereich setzt sich im Sinne der vorliegenden Anmeldung vorzugsweise aus einer der Decke zugewandten Basis und in den Raum ausgerichtete Schenkel zusammen. Die Schenkel des jeweiligen Mittelbereichs des Wärmeübertragungsprofils sind vorteilhafterweise senkrecht zu der Basis des Wärmeübertragungsprofils angeordnet, so dass Schenkel des Kontaktprofils ebenfalls senkrecht zu der Basis des Wärmeübertragungsprofils angeordnet sind. Der Mittelbereich ist vorzugsweise nicht perforiert ausgebildet, so dass eine größere wärmeübertragende Kontaktfläche zwischen dem Kontaktprofil und dem Mittelbereich des Wärmeübertragungsprofils zustande kommt, wodurch der Wärmeübergang von der Rohrleitung über das Kontaktprofil zu dem Wärmeübertragungsprofil begünstigt wird.

Im Sinne der vorliegenden Anmeldung ist vorgesehen, dass die Basis des Mittelbereichs der Decke des Raumes zugewandt ist, wohingegen die Schenkel in den Raum hineinragen. An den Schenkel befinden sich jeweils perforierte Randbereiche des Wärmeübertragungsprofils, wobei eine Fläche des jeweiligen Randbereichs vorzugsweise in einem Winkel von 30° bis 60° zu einer senkrecht zu Decke angeordneten Fläche der Schenkel angeordnet ist. Die Anzahl und Größe der Perforationen ist ungefähr so ausgestaltet, dass der Widerstand der austretenden Luft in etwa dem Widerstand der durch die Nachströmfläche (Spalt zwischen benachbarten Wärmeübertragungsprofilen) eintretenden Luft entspricht, sodass sich für diesen Fall auf möglichst hohen Niveau ein Gleichgewicht der beiden Luftströme und damit eine optimale Abkühlung oder Aufheizung ergibt.

Bezüglich der Anordnung ist es sinnvoll, wenn mehrere langgestreckte, mit ihren Längsachsen jeweils parallel zu den Längsachsen der Wärmeübertragungsprofile verlaufende Schallabsorber vorhanden sind. Das heißt, dass jedem Wärmeübertragungsprofil ein eigener Schallabsorber zugeordnet werden kann. Die einzelnen Schallabsorber können folglich auch in einem Abstand zwischen 5 cm und 20 cm, weiter vorzugsweise zwischen 10 und 15 cm zueinander angeordnet sein. Vorteilhafterweise wird der Abstand zwischen den jeweiligen Schallabsorber derart gewählt, dass auch Seitenflächen der Schallabsorber den in dem Raum erzeugten Schall zumindest indirekt absorbieren können. Dies bringt den Vorteil mit sich, dass gegenüber einem flächendeckenden Schallabsorber eine größere schallabsorbierende Fläche zur Verfügung gestellt werden kann.

Alternativ ist vorgesehen, dass mehrere Wärmeübertragungsprofile einem Schallabsorber zugeordnet werden können. Dies führt zu einer besseren Handhabbarkeit und kostengünstigeren Montage der Vorrichtung.

Zur besseren Handhabung können die Schallabsorber bereits fest montiert an den Wärmeübertragungsprofilen an den Einsatzort ausgeliefert werden. Die Schallabsorber sind zwischen dem Rohrleitungsabschnitt, welcher an einer Oberseite des Wärmeübertragungsprofils angeordnet ist, und der Decke des Raumes angeordnet. Vorteilhafterweise ist der Schallabsorber so angeordnet ist, dass er von einer in dem Raum befindlichen Person nicht sichtbar ist.

Eine vorteilhafte Weiterentwicklung der Anordnung der Vorrichtung sieht vor, dass der mindestens eine Schallabsorber mit seiner Oberseite an eine Unterseite der Decke angrenzt. Der Schallabsorber kann somit großflächig unmittelbar an der Decke befestigt werden. Aufgrund der großen Fläche des Schallabsorbers kann der Schall aus dem Raum gut absorbiert werden. Ein Abstand zwischen einer der Decke abgewandten Unterseite des Schallabsorbers und einer der Decke zugewandten Oberseite des Wärmeübertragungsprofils beträgt erfindungsgemäß vorzugsweise zwischen 2 cm und 60 cm, weiter vorzugsweise zwischen 10 cm und 30 cm.

Alternativ kann der mindestens eine Schallabsorber in einem ersten Abstand oberhalb der Wärmeübertragungsprofile und in einem zweiten Abstand unterhalb der Decke angeordnet sein. Der zweite Abstand zwischen der Decke und einer der Decke zugewandten Oberseite des Schallabsorbers beträgt vorzugsweise zwischen 2 cm und 30 cm, weiter vorzugsweise zwischen 5 cm und 10 cm. Der erste Abstand zwischen der Oberseite des jeweiligen Wärmeübertragungsprofil und einer dem Raum zugewandten Unterseite des Schallabsorbers beträgt vorzugsweise zwischen 2 cm und 30 cm, weiter vorzugsweise zwischen 10 cm und 15 cm. Dadurch wird die schallabsorbierende Fläche jedes einzelnen Schallabsorbers nochmals vergrößert, denn der Schall kann auch indirekt von der Oberseite des Schallabsorbers absorbiert werden. Eine gesamte, dem Wärmeübertragungsprofil zugewandte Fläche aller Schallabsorber könnte somit verringert werden. Folglich kann der Schallabsorber nicht sichtbar zwischen der Decke und dem Wärmeübertragungsprofil angebracht werden.

Eine Weiterentwicklung der Erfindung sieht vor, dass jeweils in dem - im Querschnitt betrachtet - Mittelbereich der Wärmeübertragungsprofile auf einer dem zu temperierenden Raum abgewandten Oberseite der Rohrleitungsabschnitt zwischen dem Wärmeübertragungsprofil und dem in Richtung der Längsachse des Wärmeübertragungsprofils verlaufenden Kontaktprofil angeordnet ist, wobei eine Längsachse des jeweiligen Wärmeübertragungsprofils und eine Längsachse des Kontaktprofils parallel zueinander und - wiederum in einer Querschnittsbetrachtung - eine senkrecht zur Decke angeordnete Mittelachse des Wärmeübertragungsprofils sowie eine senkrecht zur Decke angeordnete Mittelachse des Kontaktprofils koaxial angeordnet sind. Der Rohrleitungsabschnitt wird erfindungsgemäß zwischen dem Wärmeübertragungsprofil und dem Kontaktprofil auf einer der Decke zugewandten Seite des Wärmeübertragungsprofils angeordnet. Es ist erfindungsgemäß vorgesehen, dass der Schallabsorber oberhalb des Kontaktprofils angeordnet ist.

Die Erfindung weiter ausgestaltend ist vorgesehen, dass die Wärmeübertragungsprofile - in einem Querschnitt betrachtet - in dem Mittelbereich auf einem der Decke zugewandten Oberseite mit dem Rohrleitungsabschnitt in wärmeleitendem Kontakt sind und - von der Längsachse des jeweiligen Wärmeübertragungsprofils aus betrachtet - in beidseitig des Mittelbereichs angeordneten Randbereichen perforiert sind, wobei der freie Querschnitt in den perforierten Randbereichen vorzugsweise 10 bis 40 %, weiter vorzugsweise 15% bis 30% beträgt. Der freie Querschnitt kann je nach Bedarf ein anderer sein, denn die notwendige Schalldämmung in beispielsweise einem Großraumbüro ist eine andere wie in einem Flughafenterminal. Folglich muss je nach Einsatzgebiet abgewogen werden, wieviel Schall absorbiert werden darf, um die geforderte Raumakustik zu schaffen. Ebenso muss der freie Querschnitt derart gewählt werden, dass die Randbereiche der Wärmeübertragungsprofile eine ausreichend große Wärmeübertragung bereitstellen.

Um die Wärmeübertragung von dem Kontaktprofil zu dem Wärmeübertragungsprofil nicht einzuschränken, ist es vorteilhaft, wenn die Perforationen in den Randbereichen des Wärmeübertragungsprofils nur bis zu dem Mittelbereich reichen.

Um eine möglichst große wärmeabstrahlende Fläche bereitzustellen, ist erfindungsgemäß vorgesehen, dass die Randbereiche in einer Projektion in einer horizontalen Ebene zusammen einen Flächenanteil an dem Wärmetauschprofil von mindestens 50 %, vorzugsweise mindestens 60 %, ausmachen. Hierdurch lässt sich sowohl eine hinreichende Wärmeleitung übertragen als auch eine ausreichende Schallabsorption erzielen.

Die erfindungsgemäße Anordnung einer Vorrichtung soll bevorzugt zum Kühlen eines Raumes eingesetzt werden. Falls erforderlich wäre eine Aufheizung eines Raumes zumindest mit einer kleinen Heizleistung möglich.

Des Weiteren ist erfindungsgemäß noch vorgesehen, dass die Wärmeübertragungsprofile aus einem Blech gefertigt sind, und vorzugsweise eine konstante Blechdicke aufweisen, wobei eine Dicke des Wärmeübertragungsprofils vorzugsweise 0,5 bis 1,5 mm, weiter vorzugsweise, 0,7 mm bis 1,0 mm beträgt. Die Ausformung des Wärmeübertragungsprofils aus einem Blech bietet den Vorteil, dass das Blech in seine Endform gerollt werden kann. Dieses Verfahren ist nicht nur ein schnelleres Herstellungsverfahren, sondern auch ein kostengünstigeres Herstellungsverfahren als die aus dem Stand der Technik bekannten Strangpressverfahren oder alternative Biegeverfahren.

Eine Weiterentwicklung der Anordnung einer Vorrichtung sieht vor, dass an einer dem Raum zugewandten Seite einer Basis des Wärmeübertragungsprofils eine Zulufteinrichtung angeordnet ist. Mit Hilfe der Zulufteinrichtung kann zusätzlich ein gerichteter Luftstrom in den Raum eingeleitet werden. Dies ist insbesondere in den Fällen vorteilhaft, in denen der Raum aufgeheizt werden soll. In einem solchen Fall muss selbstverständlich ein Zuluftsystem vorhanden sein, über das den Zulufteinrichtungen - gekühlte oder erwärmte - Zuluft in Form von Primärluft oder Umluft zugeführt werden kann.

Vorteilhafterweise ist an einer dem Raum zugewandten Seite einer Basis des Wärmeübertragungsprofils ein Beleuchtungsmittel angeordnet. Somit kann auf zusätzliche Beleuchtungsmittel in dem Raum verzichtet werden und ein größerer Teil einer Fläche der Decke mit der erfindungsgemäßen Vorrichtung bedeckt werden.

Schließlich sei angemerkt, dass die verschiedenen Merkmale der Unteransprüche je einzeln für sich oder zu mehreren in beliebigen Kombinationen, sofern diese durch den Wortlaut und den Rückbezug der Patentansprüche gedeckt werden, bei Varianten der Erfindung verwirklicht sein können.

### Ausführungsbeispiele

Die vorstehend beschriebene Erfindung wird nachfolgend anhand zweier Ausführungsbeispiele, welche in den Figuren dargestellt werden, näher erläutert.

Es zeigt:
- Fig. 1:: einen Vertikalschnitt der erfindungsgemäßen Anordnung einer Vorrichtung in einer ersten Ausführungsform, und
- Fig. 2:: einen Vertikalschnitt eines Wärmeübertragungsprofil wie Figur 1, in einer vergrößerten Darstellung,
- Fig. 3:: eine dreidimensionale Ansicht des Wärmeübertragungsprofils gemäß Figur 2,
- Fig. 4:: einen Vertikalschnitt der erfindungsgemäßen Anordnung einer Vorrichtung in einer zweiten Ausführungsform,
- Fig. 5:: einen Vertikalschnitt der erfindungsgemäßen Anordnung einer Vorrichtung in einer dritten Ausführungsform,
- Fig. 6:: wie Figur 4, mit einer zusätzlichen Zulufteinrichtung in einer ersten Ausführungsform,
- Fig. 7:: wie Figur 4, mit einer zusätzlichen Zulufteinrichtung in einer zweiten Ausführungsform, und
- Fig. 8:: wie Figur 7, mit einem zusätzlichen Beleuchtungsmittel.

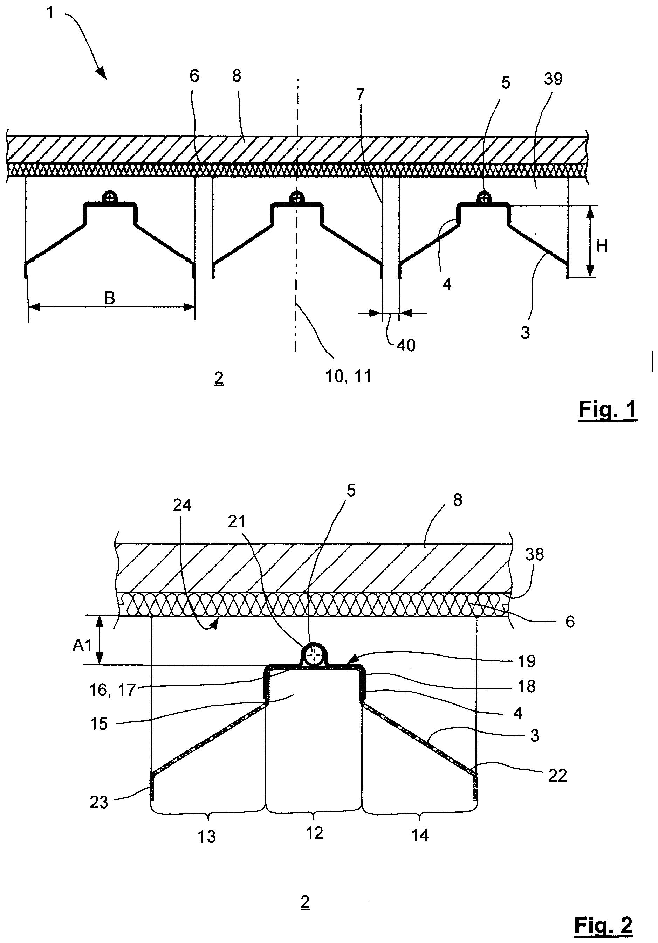

In der Figur 1 wird eine erfindungsmäße Anordnung einer Vorrichtung **1** zur Temperierung eines Raumes **2** dargestellt. Dazu weist die Vorrichtung **1** eine Mehrzahl nebeneinander angeordneter Wärmeübertragungsprofile **3,** dem jeweiligen Wärmeübertragungsprofil **3** zugeordnete Kontaktprofile **4** sowie mindestens einen zwischen dem jeweiligen Wärmeübertragungsprofil **3** und dem dazugehörigen Kontaktprofil **4** angeordneten Rohrleitungsabschnitt **5** auf. Durch eine hier nicht dargestellte Rohrleitung, die zumindest den einen Rohrleitungsabschnitt **5** aufweist, wird ein Wärmeüberträgermedium, insbesondere Wasser, hindurchgeleitet. Mehrere Rohrleitungen der jeweiligen Wärmeübertragungsprofile **3** sind zu einem Kreislauf zusammengeschlossen, wobei die Rohrleitungen in diesem Ausführungsbeispiel harfenförmig zusammengeschaltet sind.

Da mit Hilfe der erfindungsgemäßen Anordnung einer Vorrichtung **1** zusätzliche eine Schallabsorption in dem Raum **2** möglich sein soll, weist die Vorrichtung **1** weiterhin zumindest einen Schallabsorber **6** auf.

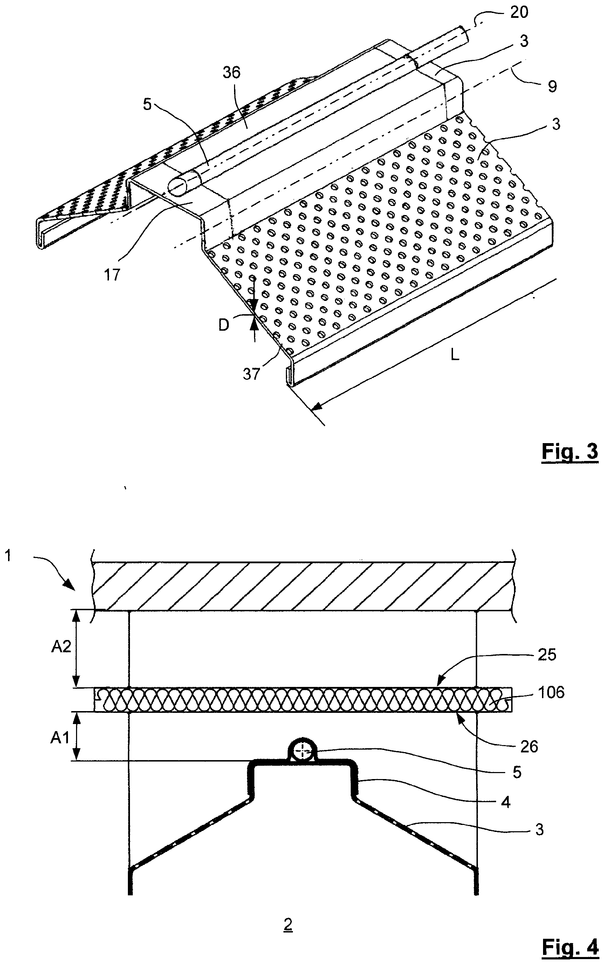

Die Wärmeübertragungsprofile **3** besitzen eine Breite **B** von 10 cm, eine Länge **L** von .200 cm (Figur 3) und eine Höhe **H** von 5 cm.

Mit Hilfe von Stangen **7,** beispielsweise Gewindestangen, werden die Wärmeübertragungsprofile **3** einzeln oder als vorgefertigte Gruppe an einer Decke **8** befestigt und sind horizontal zueinander angeordnet, wobei sich zwischen den einzelnen Wärmeübertragungsprofilen **3** ein Spalt **40** befindet, welcher 2,5 cm beträgt. Der Spalt **40** kann je nach Einsatzgebiet auch größer oder kleiner gewählt werden und ermöglicht den Durchtritt von Schall aus dem Raum in den Schallabsorber **6** sowie den Durchtritt von Luft in den oberhalb der Wärmeübertragungsprofile **3** und unterhalb des Schallabsorbers **6** befindlichen Zwischenraum **39.** Ferner sind Längsachsen **9** gemäß der Figur 3 der Wärmeübertragungsprofile **3** parallel und in einer Ebene zueinander angeordnet. In einer Projektion in einer horizontalen Ebene beträgt der von dem Wärmeübertragungsprofil **3** abgedeckte Flächenanteil üblicherweise zwischen 10% und 20%, vorliegend 15%.

Hier nicht dargestellte Längsachsen der Kontaktprofile **4** sind parallel zu den Längsachsen **9** der Wärmeübertragungsprofile **3** angeordnet. Hinzu kommt, dass Mittelachsen **10** der Kontaktprofile **4** und Mittelachsen **11** der Wärmeübertragungsprofile **3** koaxial angeordnet sind, wie in der Figur 2 dargestellt wird.

Die Figur 2 zeigt eine Schnittansicht eines einzelnen Wärmeübertragungsprofils **3** der erfindungsgemäßen Anordnung einer Vorrichtung **1** gemäß Figur 1. Das Wärmeübertragungsprofil **3** setzt sich aus einem U-förmigen Mittelbereich **12** und zwei daran angrenzenden perforierten Randbereichen **13, 14** zusammen. Eine Öffnung **15** des U-förmigen Mittelbereichs **12** zeigt in den Raum **2** hinein, wohingegen eine Unterseite **16** des U, eine Basis **17,** zur Decke **8** hin gerichtet ist. Zwei an der Basis **17** angeordnete Schenkel **18** des U sind senkrecht zur Decke **8** ausgerichtet und reichen bis zu den Randbereichen **13, 14.** Auf einer der Decke **8** zugewandten Oberseite **19** des Wärmeübertragungsprofils **3** beziehungsweise der Basis **17** des Wärmeübertragungsprofils **3** befindet sich der Rohrleitungsabschnitt **5** unmittelbar auf dem Wärmeübertragungsprofil **3,** so dass eine Längsachse **20** des Rohrleitungsabschnitts **5** parallel zu der Längsachse **9** des Wärmeübertragungsprofils **3** angeordnet ist, wie aus Figur 3 hervorgeht.

Zur wärmeübertragenden Verbindung des Rohrleitungsabschnitts **5** und des Wärmeübertragungsprofils **3** wird das Kontaktprofil **4** auf den Mittelbereich **12** des Wärmeübertragungsprofils **3** gepresst, wobei zwischen dem Wärmeübertragungsprofil **3** und dem Kontaktprofil **4** eine hier nicht sichtbare, gut wärmeleitende Klebschicht, vorzugsweise in Form einer dünnen Folie, die eine Dicke von weniger als 1 mm aufweist, angeordnet ist, und die das Wärmeübertragungsprofil **3** mit dem Kontaktprofil **4** verbindet. Vor dem Pressvorgang wird die Klebschicht auf dem Kontaktprofil **4** angebracht, so dass die Klebschicht das Kontaktprofil **4** auch teilweise an dem Rohrleitungsabschnitt **5** befestigt. Das Kontaktprofil **4** schmiegt sich bei dem Pressvorgang derart an das Wärmeübertragungsprofil **3** und den Rohrleitungsabschnitt **5** an, dass eine große wärmeübertragende Kontaktfläche zwischen dem Wärmeübertragungsprofil **3** und dem Kontaktprofil **4** sowie dem Rohrleitungsabschnitt **5** und dem Kontaktprofil **4** entsteht, das heißt, dass das Kontaktprofil **4** weitestgehend U-förmig ist, wobei ein im Querschnitt halbovalförmiger Dom **21** in einem Bereich der Basis **17** des Wärmeübertragungsprofils **3** vorhanden ist, in dem der Rohrleitungsabschnitt **5** angeordnet ist.

Die in den Kontaktprofilen **4** befindlichen Rohrleitungsabschnitte **5** weisen eine D-Form auf, so dass ein wärmeübertragender Kontakt zwischen dem Rohrleitungsabschnitt **5** und dem Wärmeübertragungsprofil **3** vergrößert wird. Das Kontaktprofil **4** deckt bevorzugt den gesamten Mittelbereich **12** des Wärmeübertragungsprofils **3** ab und reicht bis fast an die beiden Randbereiche **13, 14.** Im vorliegenden Fall beträgt der Perforationsgrad in den beiden Randbereichen **13, 14,** also ein freier Querschnitt der aufgrund von Perforationen **22** entsteht, **20**%. Ein Lochdurchmesser der jeweiligen Perforationen beträgt 4 mm. Die Perforationen **22** befinden sich in dem gesamten Randbereich **13, 14** mit Ausnahme von senkrecht zu der Decke ausgerichteten freien Randstreifen **23** der Randbereiche **13, 14.**

Die zwischen den Randstreifen **23** und dem Mittelbereich **12** angeordneten, perforierten Randbereiche **13, 14** sind in einem Winkel von 30° zur Decke **8** angeordnet. In einer Projektion in einer horizontalen Ebene beträgt ein Flächenanteil der Randbereiche **13, 14** 60%.

Die Perforationen **22** sollen Schall durch das Wärmeübertragungsprofil **3** hindurch in Richtung des Schallabsorbers **6,** der an einer Unterseite **38** der Decke **8** in einem Abstand **A1** von 10 cm zu der Basis **17** des Wärmeübertragungsprofils **3** und in einem Abstand von wenigen Millimetern zu der Decke **8** angeordnet ist, leiten. Der Schallabsorber **6** ist flächendeckend unter der Decke **8** befestigt und weist in diesem Ausführungsbeispiel eine strukturierte Oberfläche **24** auf, damit mehr Schall absorbiert werden kann.

Die Figur 3 zeigt einen Abschnitt des Wärmeübertragungsprofils **3** und des darauf angeordneten Rohrleitungsabschnitts **5** gemäß Figur 1. Der Rohrleitungsabschnitt 5 ist auf einer Oberseite **36** des Mittelbereichs **12** des Wärmeübertragungsprofils **3** angeordnet. Die Längsachse **20** des Rohrleitungsabschnitts **5** ist parallel zu der Längsachse **9** des Wärmeübertragungsprofils 3 und mittig auf der Basis **17** des Mittelbereichs **12** (Figur 2) angeordnet. Ferner ist in der Figur 3 auch gut erkennbar, dass die Randbereiche **13, 14** (Figur 2) des Wärmeübertragungsprofils 3 Perforationen **22** aufweisen.

Das Wärmeübertragungsprofil 3 ist aus einem Blech **37** gefertigt, welches eine Dicke D von 0,7 mm aufweist.

Die Figur 4 zeigt einen Ausschnitt einer zweiten Ausführungsform der erfindungsgemäßen Anordnung der Vorrichtung **1.** Der Aufbau des Wärmeübertragungsprofils **3,** des Rohrleitungsabschnitts **5** und des Kontaktprofils **4** entsprechen dem Aufbau der Vorrichtung **1** gemäß der Figur 1. Der Schallabsorber **106** ist jedoch nicht flächendeckend an der Decke **8** angebracht, sondern jedem Wärmeübertragungsprofil **3** wird ein einzelner Schallabsorber 106 zugeordnet, der in einem zweiten Abstand **A2** zur Decke **8,** zwischen der Decke **8** und dem Wärmeübertragungsprofil **3,** in einer horizontalen Ausrichtung zur Decke **8** angeordnet ist. Der zweite Abstand **A2** zwischen der Decke **8** und einer der Decke **8** zugewandten Oberseite **25** des Schallabsorbers **106** beträgt 10 cm. Ferner ist der erste Abstand **A1** zwischen der Basis **17** des Wärmeübertragungsprofils **3** und einer dem Raum **2** zugewandten Unterseite **26** des Schallabsorbers **106** 10 cm. Hier nicht dargestellte Längsachsen der Schallabsorber **106** sind parallel zu den Längsachsen **9** (Figur 3) der Wärmeübertragungsprofile **3** angeordnet.

Aufgrund des hier nicht sichtbaren Abstandes zwischen den einzelnen Schallabsorbern **106,** der 10 cm beträgt, wird ein hier nicht dargestellter Spalt zwischen den einzelnen Schallabsorbern **106** ausgebildet, durch den Schall hindurchgeleitet werden kann.

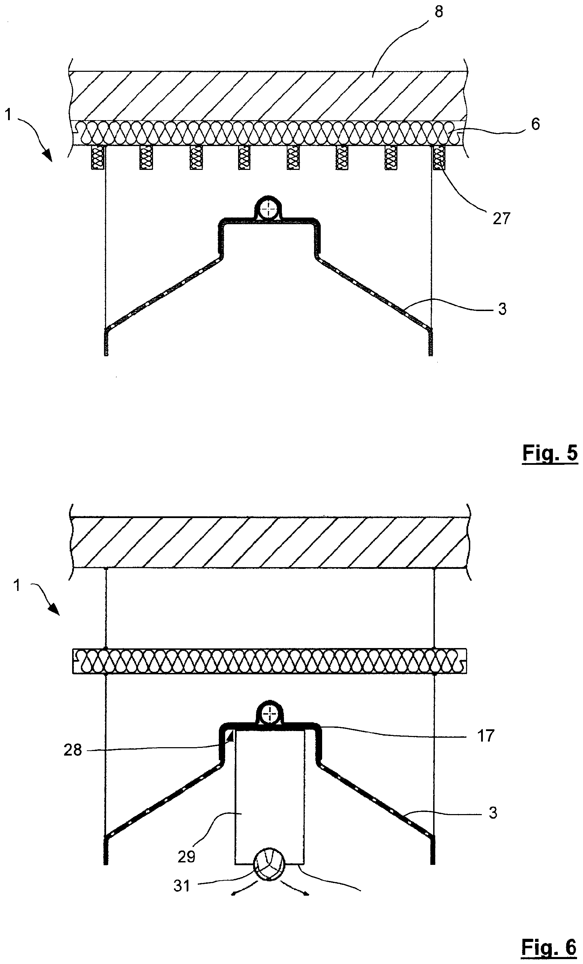

Der in der Figur 5 dargestellte Ausschnitt der erfindungsgemäßen Anordnung der Vorrichtung **1** entspricht weitestgehend der Vorrichtung **1** gemäß der Figur 1, allerdings sind parallel zu der Längsachse **9** (Figur 3) des Wärmeübertragungsprofils **3** und senkrecht zur Decke **8** ausgerichtete weitere streifenförmige Schallabsorber **27** auf dem flächendeckenden Schallabsorber **6** angebracht.

Die Figur 6 zeigt einen Ausschnitt die erfindungsgemäße Anordnung der Vorrichtung **1** gemäß Figur 4, wobei an der Basis **17** des Wärmeübertragungsprofils 3 auf einer dem Raum **2** zugewandten Seite **28** der Basis **17** eine Zulufteinrichtung **29** angeordnet ist. Diese Zulufteinrichtung **29** weist an ihrer dem Raum **2** zugewandten Unterseite **30** ein oder mehrere hintereinander angeordnete Luftaustrittselemente **31** auf, mittels dessen beziehungsweise derer Zuluft ungefähr horizontal in den Raum **2** eingeleitet werden kann. Dies führt zu einer zusätzlichen Senkung oder Erhöhung der Temperatur in einem Raum **2** sowie der Möglichkeit, auch Primärluft in den Raum **2** einzubringen.

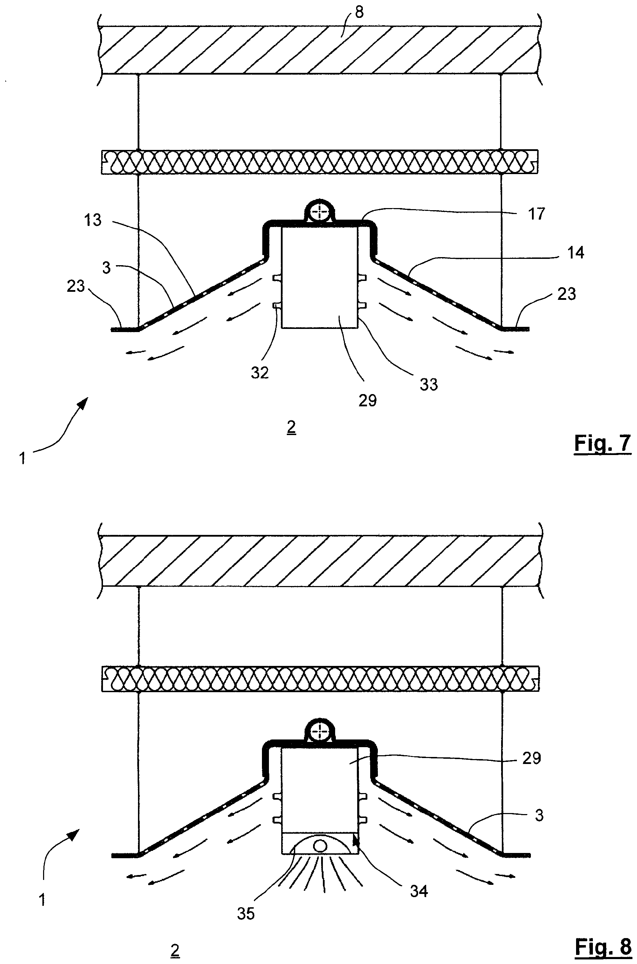

Die Figur 7 zeigt eine Vorrichtung **1** gemäß der Figur 4, wobei - wie bei der Figur 6 - zusätzlich an der Basis **17** des Wärmeübertragungsprofils **3** eine Zulufteinrichtung **29** angeordnet ist. Die Zulufteinrichtung **29** weist in diesem Fall mehrere Düsen **32,** die in zwei horizontalen Düsenreihen in den senkrecht zu der Decke **8** angeordnete Seitenwände **33** der Zulufteinrichtung **29** angeordnet sind, auf. Mit Hilfe der Düsen **32** kann Zuluft entlang des Randbereichs **13, 14** in den Raum **2** eingeleitet werden. Um eine horizontale Ausströmung der Zuluft zu erreichen, sind die Randstreifen **23** des Randbereichs **13, 14** in diesem Ausführungsbeispiel nicht vertikal, sondern horizontal zur Decke **8** angeordnet sind.

Die Figur 8 zeigt eine erfindungsgemäße Anordnung der Vorrichtung **1** gemäß der Figur 7, wobei sich das in der Figur 8 dargestellte Ausführungsbeispiel dahingehend von dem Ausführungsbeispiel gemäß Figur 7 unterscheidet, dass an einer dem Raum **2** zugewandten Unterseite **34** der Zulufteinrichtung **29** mehrere Beleuchtungsmittel **35** in einer Reihe parallel zu einer hier nicht dargestellten Längsachse des Wärmeübertragungsprofils **3** angebracht ist. Abschließend sei bemerkt, dass die verschiedenen Merkmale je einzeln für sich oder zu mehreren in beliebigen Kombinationen bei Varianten der Erfindung verwirklicht sein können, sofern diese unter den Wortlaut der folgenden Patentansprüche fallen.

### Bezugszeichenliste

- B: Breite
- L: Länge
- H: Höhe
- A1: Abstand
- A2: Abstand
- D: Dicke

- 1: Vorrichtung
- 2: Raum
- 3: Wärmeübertragungsprofil
- 4: Kontaktprofil
- 5: Rohrleitungsabschnitt
- 6, 106: Schallabsorber
- 7: Stangen
- 8: Decke
- 9: Längsachse
- 10: Mittelachse
- 11: Mittelachse
- 12: Mittelbereich
- 13: Randbereich
- 14: Randbereich
- 15: Öffnung
- 16: Unterseite
- 17: Basis
- 18: Schenkel
- 19: Seite
- 20: Längsachse
- 21: Dom
- 22: Perforationen
- 23: Randstreifen
- 24: Oberfläche
- 25: Oberseite
- 26: Unterseite
- 27: Schallabsorber
- 28: Seite
- 29: Zulufteinrichtung
- 30: Unterseite
- 31: Luftaustrittselement
- 32: Düsen
- 33: Seitenwände
- 34: Unterseite
- 35: Beleuchtungsmittel
- 36: Oberseite
- 37: Blech
- 38: Unterseite
- 39: Zwischenraum
- 40: Spalt

## Patentansprüche

1. Anordnung einer Vorrichtung (1) zur Temperierung eines Raums (2) an einer Decke (8) des Raumes (2), umfassend
- eine Mehrzahl von langgestreckten, mit ihren Längsachsen (9) parallel zueinander angeordneten, vorzugsweise metallischen, Wärmeübertragungsprofilen (3) und
- pro Wärmeübertragungsprofil (3) eine Rohrleitung zur Durchströmung mit einem Wärmeträgermedium,
wobei zumindest ein Rohrleitungsabschnitt (5) parallel zu einer Längsachse (9) eines Wärmeübertragungsprofils (3) verläuft und mit letzterem in wärmeübertragender Weise gekoppelt ist, wobei die Wärmeübertragungsprofile (3) zumindest bereichsweise perforiert sind und zwischen einer einer Decke (8) des Raumes (2) zugewandten Oberseite (19) der Wärmeübertragungsprofile (3) und der Decke (8) mindestens ein der Vorrichtung (1) zugehöriger Schallabsorber (6, 106) auf einer der Decke (8) zugewandten Seite der Vorrichtung (1) angeordnet ist, **wobei** sich zwischen benachbarten Wärmeübertragungsprofilen (3) jeweils ein Spalt (40) zum Durchtritt von einerseits Schall aus dem Raum (2) in den Schallabsorber (6, 106) und andererseits Luft aus dem Raum (2) in einen oberhalb der Wärmeübertragungsprofile (3) und unterhalb des Schallabsorbers (6, 106) befindlichen Zwischenraum (39) befindet, **dadurch gekennzeichnet, dass** die Wärmeübertragungsprofile (3) - im Querschnitt betrachtet - jeweils in einem Mittelbereich (12) einen U-förmigen Abschnitt mit zwei dem zu temperierenden Raum zugewandten Schenkeln (18) und einer mit einem Rohrleitungsabschnitt (5) in Kontakt stehende Basis (17) aufweisen, und dass ein Kontaktprofil (4) mit beiden Schenkeln (18) in wärmeleitendem Kontakt steht, wobei der Rohrleitungsabschnitt (5) zwischen dem Wärmeübertragungsprofil (3) und dem Kontaktprofil (4) auf einer der Decke (8) zugewandten Seite des Wärmeübertragungsprofils (3) angeordnet ist.

2. Anordnung einer Vorrichtung nach Anspruch 1, **dadurch gekennzeichnet, dass** mehrere langgestreckte, mit ihren Längsachsen jeweils parallel zu den Längsachsen (9) der Wärmeübertragungsprofile (3) verlaufende Schallabsorber (6, 106) vorhanden sind.

3. Anordnung einer Vorrichtung nach Anspruch 1 oder 2, **dadurch gekennzeichnet, dass** der mindestens eine Schallabsorber (6, 106) mit seiner Oberseite (25) an eine Unterseite (38) der Decke (8) angrenzt.

4. Anordnung einer Vorrichtung nach Anspruch 1 oder 2, **dadurch gekennzeichnet, dass** der mindestens eine Schallabsorber (6, 106) in einem ersten Abstand (A1) oberhalb der Wärmeübertragungsprofile (3) und in einem zweiten Abstand (A2) unterhalb der Decke (8) angeordnet ist.

5. Anordnung einer Vorrichtung nach einem der Ansprüche 1 bis 4, **dadurch gekennzeichnet, dass** jeweils in dem - im Querschnitt betrachtet - Mittelbereich (12) der Wärmeübertragungsprofile (3) auf einer dem zu temperierenden Raum (2) abgewandten Oberseite (36) der Rohrleitungsabschnitt (5) zwischen dem Wärmeübertragungsprofil (3) und dem in Richtung der Längsachse (9) des Wärmeübertragungsprofils (3) verlaufenden Kontaktprofil (4) angeordnet ist

6. Anordnung einer Vorrichtung nach einem der Ansprüche 1 bis 5, **dadurch gekennzeichnet, dass** die Wärmeübertragungsprofile (3) - in einem Querschnitt betrachtet - in dem Mittelbereich (12) auf der der Decke (8) zugewandten Oberseite mit dem Rohrleitungsabschnitt (5) in wärmeleitendem Kontakt sind und - von der Längsachse (9) des jeweiligen Wärmeübertragungsprofils (3) aus betrachtet - in beidseitig des Mittelbereichs (12) angeordneten Randbereichen (13, 14) perforiert sind, wobei der freie Querschnitt in den perforierten Randbereichen (13, 14) vorzugsweise 10 bis 40 %, weiter vorzugsweise 15% bis 30% beträgt.

7. Anordnung einer Vorrichtung nach Anspruch 6, **dadurch gekennzeichnet, dass** die Perforationen (22) in den Randbereichen (13, 14) nur bis zu dem Mittelbereich (12) reichen.

8. Anordnung einer Vorrichtung nach Anspruch 6 oder 7, **dadurch gekennzeichnet, dass** die Randbereiche (13, 14) in einer Projektion in einer horizontalen Ebene zusammen einen Flächenanteil an dem Wärmeübertragungsprofil (3) von mindestens 50 %, vorzugsweise mindestens 60 %, ausmachen.

9. Anordnung einer Vorrichtung nach einem der Ansprüche 1 bis 8, **dadurch gekennzeichnet, dass** die Wärmeübertragungsprofile (3) aus einem Blech (37) gefertigt sind, und vorzugsweise eine konstante Blechdicke aufweisen, wobei eine Dicke (D) des Wärmeübertragungsprofils vorzugsweise 0,5 mm bis 1,5 mm, weiter vorzugsweise, 0,7 mm bis 1,0 mm beträgt.

## Claims

1. A configuration for a device (1) for conditioning a room (2) on a ceiling (8) of the room (2), comprising
- a plurality of elongated, preferably metallic, heat transfer profiles (3) with their longitudinal axes (9) disposed parallel to each other, and
- a conduit per heat transfer profile (3) for the through passage of a heat transfer medium,
wherein at least one conduit section (5) runs parallel to a longitudinal axis (9) of a heat transfer profile (3) and is coupled thereto in a heattransferring manner, wherein the heat transfer profiles (3) are perforated at least in regions and, between a top side (19) of the heat transfer profiles (3) facing a ceiling (8) of the room (2) and the ceiling (8), at least one sound absorber (6, 106) belonging to the device (1) is disposed on a side of the device (1) facing the ceiling (8), **wherein** a respective gap (40) is located between adjacent heat transfer profiles (3) for the passage on the one hand of sound from the room (2) into the sound absorber (6, 106) and on the other hand of air from the room (2) into a space (39) located above the heat transfer profiles (3) and below the sound absorber (6, 106), **characterized in that,** in a central region (12) - viewed in cross section -the respective heat transfer profiles (3) have a U-shaped section with two limbs (18) facing the room to be conditioned and a base (17) in contact with a conduit section (5), and **in that** a contact profile (4) is in heat transferring contact with both limbs (18), wherein the conduit section (5) is disposed between the heat transfer profile (3) and the contact profile (4) on a side of the heat transfer profile (3) facing the ceiling (8).

2. The configuration for a device as claimed in claim 1, **characterized in that** a plurality of elongated sound absorbers (6, 106) are present with their respective longitudinal axes running parallel to the longitudinal axes (9) of the heat transfer profiles (3) .

3. The configuration for a device as claimed in claim 1 or claim 2, **characterized in that** the top side (25) of the at least one sound absorber (6, 106) adjoins an underside (38) of the ceiling (8).

4. The configuration for a device as claimed in claim 1 or claim 2, **characterized in that** the at least one sound absorber (6, 106) is disposed at a first distance (A1) above the heat transfer profiles (3) and at a second distance (A2) below the ceiling (8).

5. The configuration for a device as claimed in one of claims 1 to 4, **characterized in that** the conduit section (5) is disposed in the respective central region (12) - viewed in cross section - of the heat transfer profiles (3) on a top side (36) facing away from the room (2) to be conditioned between the heat transfer profile (3) and the contact profile (4) running in the direction of the longitudinal axis (9) of the heat transfer profile (3).

6. The configuration for a device as claimed in one of claims 1 to 5, **characterized in that** the heat transfer profiles (3) are in heat transferring contact with the conduit section (5) in the central region (12) - viewed in a cross section - on the top side facing the ceiling (8) and - viewed from the longitudinal axis (9) of the respective heat transfer profile (3) - are perforated in edge regions (13, 14) disposed on both sides of the central region (12), wherein the open cross section in the perforated edge regions (13, 14) is preferably 10 % to 40 %, more preferably 15 % to 30 %.

7. The configuration for a device as claimed in claim 6, **characterized in that** the perforations (22) in the edge regions (13, 14) reach only to the central region (12) .

8. The configuration for a device as claimed in claim 6 or claim 7, **characterized in that,** in a projection in a horizontal plane, the edge regions (13, 14) together form a proportion of the surface at the heat transfer profile (3) of at least 50 %, preferably at least 60 %.

9. The configuration for a device as claimed in one of claims 1 to 8, **characterized in that** the heat transfer profiles (3) are fabricated from a sheet metal (37), and preferably have a constant sheet metal thickness, wherein a thickness (D) of the heat transfer profile is preferably 0.5 mm to 1.5 mm, more preferably 0.7 mm to 1.0 mm.

## Revendications

1. Agencement d'un dispositif (1), destiné à tempérer une pièce (2) sur un plafond (8) de la pièce (2), comprenant
- une pluralité de profilés (3) de transfert thermique allongés, de préférence métalliques, placés à la parallèle les uns des autres par leurs axes longitudinaux (9),
- par profilé (3) de transfert thermique, une conduite, destinée à être traversée par un agent caloporteur,
au moins un tronçon (5) de conduite s'écoulant à la parallèle d'un axe longitudinal (9) d'un profilé (3) de transfert thermique et étant accouplé avec ce dernier de manière à transférer la chaleur, les profilés (3) de transfert thermique étant perforés au moins par endroits et entre une face supérieure (19) des profilés (3) de transfert thermique dirigée vers un plafond (8) de la pièce (2) et le plafond (8) étant placé au moins un absorbeur de bruit (6, 106) appartenant au dispositif (1), sur une face du dispositif (1) dirigée vers le plafond (8), entre des profilés (3) de transfert thermique voisins se trouvant chaque fois une fente (40) pour le passage d'une part, de bruit provenant de la pièce (2) dans l'absorbeur de bruit (6, 106) et d'autre part, d'air provenant de la pièce (2) dans un espace intermédiaire (39) situé au-dessus des profilés (3) de transfert thermique et en-dessous de l'absorbeur de bruit (6, 106), **caractérisé en ce que** (considérés dans la section transversale), les profilés (3) de transfert thermique comportent dans la zone centrale (12) un tronçon en forme de U pourvu de deux branches (18) dirigées vers la pièce qu'il s'agit de tempérer et d'une base (17) qui est en contact avec un tronçon (5) de conduite et **en ce qu'**un profilé de contact (4) est en contact de transfert de chaleur avec les deux branches (18), le tronçon (5) de conduite étant placé entre le profilé (3) de transfert thermique et le profilé de contact (4), sur une face du profilé (3) de transfert thermique qui est dirigée vers le plafond (8) .

2. Agencement d'un dispositif selon la revendication 1, **caractérisé en ce que** plusieurs absorbeurs de bruit (6, 106) allongés, s'écoulant chaque fois par leurs axes longitudinaux à la parallèle des axes longitudinaux (9) des profilés (3) de transfert thermique sont présents.

3. Agencement d'un dispositif selon la revendication 1 ou 2, **caractérisé en ce que** l'au moins un absorbeur de bruit (6, 106) est adjacent par sa face supérieure (25) à une face inférieure (38) du plafond (8).

4. Agencement d'un dispositif selon la revendication 1 ou 2, **caractérisé en ce que** l'au moins un absorbeur de bruit (6, 106) est placé avec un premier écart (A1) au-dessus des profilés (3) de transfert thermique et avec un deuxième écart (A2) en-dessous du plafond (8).

5. Agencement d'un dispositif selon l'une quelconque des revendications 1 à 4, **caractérisé en ce que** (considéré dans la section transversale), chaque fois dans la zone centrale (12) des profilés (3) de transfert thermique, sur une face supérieure (36) qui est opposée à la pièce (2) qu'il s'agit de tempérer, le tronçon (5) de conduite est placé entre le profilé (3) de transfert thermique et le profilé de contact (4) s'écoulant dans la direction de l'axe longitudinal (9) du profilé (3) de transfert thermique

6. Agencement d'un dispositif selon l'une quelconque des revendications 1 à 5, **caractérisé en ce que** (considérés dans une section transversale), les profilés (3) de transfert thermique sont en contact de transfert thermique dans la zone centrale (12) sur la face supérieure dirigée vers le plafond (8) avec le tronçon (5) de conduite et sont perforés (considérés à partir de l'axe longitudinal (9) du profilé (3) de transfert thermique en question) dans des zones marginales (13, 14) placées de part et d'autre de la zone centrale (12), la section transversale libre dans les zones marginales (13, 14) perforées s'élevant de préférence à de 10 à 40 %, de manière plus préférentielle, à de 15 % à 30 %.

7. Agencement d'un dispositif selon la revendication 6, **caractérisé en ce que** les perforations (22) dans les zones marginales (13, 14) n'arrivent que jusqu'à la zone centrale (12).

8. Agencement d'un dispositif selon la revendication 6 ou 7, **caractérisé en ce que**, dans une projection dans un plan horizontal, les zones marginales (13, 14) correspondent ensemble à une part de la surface du profilé (3) de transfert thermique d'au moins 50 %, de préférence d'au moins 60 %.

9. Agencement d'un dispositif selon l'une quelconque des revendications 1 à 8, **caractérisé en ce que** les profilés (3) de transfert thermique sont fabriqués en une tôle (37) et présentent de préférence une épaisseur de tôle constante, une épaisseur (D) du profilé de transfert thermique s'élevant de préférence à de 0,5 mm à 1,5 mm, de manière plus préférentielle, à de 0,7 mm à 1,0 mm.
